# DEMANDE DE BREVET EUROPEEN

(11) **EP 4 760 145 A1**
(43) Date de publication de la demande: **17.06.2026**
(21) Numéro de dépôt: 25214366.4
(22) Date de dépôt: 07.11.2025
(51) Int. Cl.: F21S 45/30, F21S 45/33, F21S 45/50

(54) **BLOC OPTIQUE À BOÎTIER SIMPLIFIÉ, POUR UN VÉHICULE**

(30) Priorité: 13.12.2024 FR 2414082
(71) Demandeur: Stellantis Auto SAS, 78300 Poissy (FR)
(72) Inventeur: SCHNURIGER, Damien, 62000 ARRAS (FR)
(74) Mandataire: ESIP

(57) **Abrégé**

Un bloc optique (BO) équipe un véhicule et comprend un boîtier (BB) définissant avec une glace (GP) une cavité (CB) logeant des composants propres à assurer au moins une fonction photométrique. Ce boîtier (BB) comprend au moins une patte de fixation (PF) saillant sur une paroi périphérique (PP) qui comprend au niveau, et à côté, de cette patte de fixation (PF) au moins un trou traversant (TT) recouvert par une membrane respirante (MR) propre à permettre la circulation d'air tout en empêchant l'entrée de liquide, la patte de fixation (PF) protégeant la membrane respirante (MR) de ruissellements.

## Description

### Domaine technique de l'invention

L'invention concerne les blocs optiques qui sont propres à équiper certains véhicules et qui comprennent un boîtier.

### Etat de la technique

De nombreux véhicules, éventuellement de type automobile, comprennent au moins un bloc optique définissant avec une glace une cavité logeant des composants qui sont propres à assurer au moins une fonction photométrique d'éclairage et/ou au moins une fonction photométrique de signalisation. Afin de permettre la fixation de ce type de bloc optique sur un équipement ou élément d'un véhicule, le boîtier comprend une paroi périphérique sur laquelle saille au moins une patte de fixation.

On notera que ce type de fixation peut être installé dans une extrémité avant ou arrière d'un véhicule.

Le boîtier et la glace (de protection) sont solidarisés l'un à l'autre de façon étanche (généralement par collage, et avec interposition d'un joint d'étanchéité) pour éviter la pénétration de liquide dans la cavité qu'ils délimitent ensemble. Comme le sait l'homme de l'art, afin de permettre un équilibrage de la pression intérieure dans la cavité et de la pression atmosphérique à l'extérieur de cette cavité, mais aussi afin de permettre une circulation d'air dans cette cavité pour éviter la condensation et permettre une évacuation des calories générées en fonctionnement, on définit au moins un trou traversant recouvert par une membrane respirante dans au moins une paroi du boîtier (généralement celle définissant le fond (ou l'arrière) de la cavité).

Habituellement, chaque membrane respirante est collée sur sa paroi de boîtier à la périphérie du trou traversant associé. Or, les ruissellements de liquide sur la face externe de cette paroi peuvent, à la longue, provoquer un décollement d'une membrane respirante et ainsi rendre le bloc optique non étanche, ce qui peut engendrer en interne des courts-circuits (voire un feu électrique) et/ou un vieillissement accéléré de composants électriques ou électroniques.

Afin d'éviter le décollement précité, on définit sur la face externe de la paroi de boîtier une nervure anti-ruissellement entourant intégralement chaque trou traversant recouvert par une membrane respirante. Cela permet de lutter contre le ruissellement direct sur chaque membrane respirante, mais la définition de chaque nervure anti-ruissellement nécessite d'adapter et complexifier le moule permettant de réaliser le boîtier, ce qui impose généralement lors du démoulage au moins un mouvement supplémentaire pour dégager chaque nervure anti-ruissellement, et donc complexifie les opérations de fabrication des boîtiers et par conséquent augmente les coûts de fabrication des boîtiers.

L'invention a donc notamment pour but d'améliorer la situation.

### Présentation de l'invention

Elle propose notamment à cet effet un bloc optique propre à équiper un véhicule et comprenant un boîtier, d'une part, définissant avec une glace une cavité logeant des composants propres à assurer au moins une fonction photométrique, et, d'autre part, comportant au moins une patte de fixation saillant sur une paroi périphérique.

Ce bloc optique se caractérise par le fait que :
- la paroi périphérique de son boîtier comprend au niveau, et à côté, de la patte de fixation au moins un trou traversant recouvert par une membrane respirante propre à permettre une circulation d'air tout en empêchant une entrée de liquide dans le boîtier, et
- la patte de fixation protège cette membrane respirante de ruissellements.

Ainsi, la (chaque) patte de fixation a une double fonction : elle participe à la fixation de son bloc optique et définit un déflecteur (ou une « casquette ») anti-ruissellement pour la membrane respirante installée à côté d'elle (ou sous elle), ce qui permet de ne pas avoir à définir de nervure anti-ruissellement autour du trou traversant recouvert par cette membrane respirante, et donc de simplifier le moule et d'éviter d'avoir à ajouter au moins un mouvement supplémentaire pour dégager chaque nervure anti-ruissellement lors du démoulage.

Le bloc optique selon l'invention peut comporter d'autres caractéristiques qui peuvent être prises séparément ou en combinaison, et notamment :
- son boîtier peut comporter au moins deux pattes de fixation saillant sur sa paroi périphérique et au niveau, et à côté, de chacune desquelles est défini au moins un trou traversant recouvert par une membrane respirante ;
- la paroi périphérique de son boîtier peut comprendre au niveau, et à côté, de chaque patte de fixation un renfoncement dans lequel est défini au moins un trou traversant recouvert par une membrane respirante ;
- chaque patte de fixation peut saillir sensiblement perpendiculairement à une portion de la paroi périphérique du boîtier.

L'invention propose également un véhicule, éventuellement de type automobile, et comprenant au moins un bloc optique du type de celui présenté ci-avant.

Par exemple, ce véhicule peut comprendre une extrémité avant comportant chaque bloc optique.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective du côté arrière, une partie d'un exemple de réalisation d'un bloc optique selon l'invention, et
[Fig.2] illustre schématiquement, dans une vue en coupe au niveau d'une patte de fixation, une partie du boîtier du bloc optique de la figure 1.

### Description détaillée de l'invention

L'invention a notamment pour but de proposer un bloc optique BO destiné à équiper un véhicule et dont le boîtier BB est simplifié par rapport à un boîtier de l'art antérieur.

Dans ce qui suit, on considère, à titre d'exemple non limitatif, que le bloc optique BO est destiné à équiper un véhicule automobile, comme par exemple une voiture. Mais le bloc optique BO peut équiper n'importe quel véhicule (terrestre, maritime (ou fluvial), ou aérien).

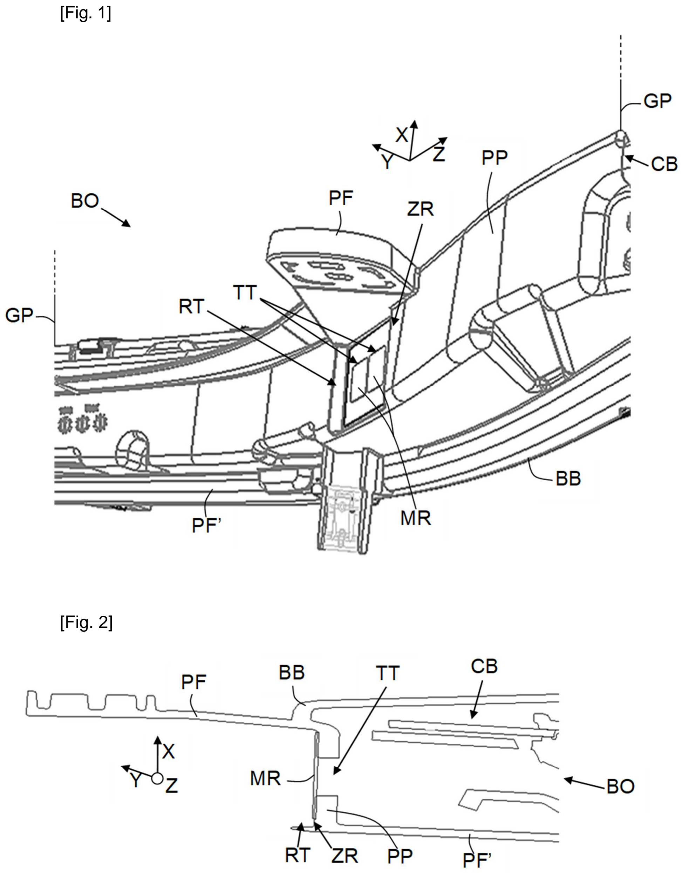

Par ailleurs, on considère dans ce qui suit, à titre d'exemple non limitatif et comme illustré partiellement et non limitativement sur la figure 1, que le bloc optique BO est destiné à faire partie d'une extrémité avant d'un véhicule automobile. Il constitue alors un feu avant ou un projecteur. Mais le bloc optique BO pourrait être destiné à équiper une extrémité arrière d'un véhicule, et dans ce cas il constitue un feu arrière, par exemple.

Sur les figures 1 et 2 la direction X est destinée à être parallèle à la direction longitudinale du véhicule, laquelle est sensiblement parallèle aux côtés latéraux (ou longitudinaux) comportant les portières latérales, la direction Y est destinée à être parallèle à la direction transversale du véhicule, laquelle est perpendiculaire à la direction longitudinale X, et la direction Z est destinée à être parallèle à la direction verticale du véhicule, laquelle est perpendiculaire aux directions longitudinale X et transversale Y.

Dans ce qui précède et ce qui suit les notions « d'avant » et « d'arrière » sont définies par rapport à l'extrémité avant du véhicule. Par conséquent, la partie avant d'un élément est située plus près de l'extrémité avant du véhicule que la partie arrière de ce même élément.

On a schématiquement illustré au moins partiellement sur la figure 1 une partie d'un exemple de réalisation d'un bloc optique BO selon l'invention. Comme illustré au moins partiellement sur les figures 1 et 2 un bloc optique BO, selon l'invention, comprend un boîtier BB et une glace (de protection) GP qui définissent ensemble une cavité CB logeant des composants propres à assurer au moins une fonction photométrique d'éclairage (comme par exemple une fonction de feu de route ou de feu de croisement) ou de signalisation (comme par exemple une fonction de feu de jour (ou DRL (« Daytime Running Light (ou Lamp) »)), ou une fonction d'indicateur de changement de direction (ou clignotant), ou encore une fonction de feu de position).

Parmi les composants logés dans la cavité CB, on peut notamment citer une source de photons (éventuellement installée avec des circuits de commande et d'alimentation électrique sur une carte électronique pouvant être une carte à circuits imprimés de type PCB (« Printed Circuit Board »)), un élément optique (comme par exemple un guide de lumière, un réflecteur ou une lentille), et un masque.

On notera que les photons participant à la (chaque) fonction photométrique du bloc optique BO sortent de la cavité CB par la glace (de protection) GP, qui sert donc d'interface avec l'extérieur du bloc optique BO.

Le boîtier BB et la glace (de protection) GP sont solidarisés l'un à l'autre de façon étanche, par exemple par collage et avec interposition d'un joint d'étanchéité pour éviter la pénétration de liquide dans la cavité CB qu'ils délimitent ensemble.

Le boîtier BB comprend au moins une paroi périphérique PP sur laquelle saille au moins une patte de fixation PF. On entend ici par « paroi périphérique PP » une paroi qui est solidarisée fixement à la périphérie de la paroi de fond (ou arrière) PF' du boîtier BB, et qui peut (comme illustré non limitativement) être également solidarisée fixement à la glace GP.

Comme illustré sur les figures 1 et 2, cette paroi périphérique PP comprend au niveau, et à côté, de la patte de fixation PF au moins un trou traversant TT qui est recouvert par une membrane respirante MR propre à permettre une circulation d'air de l'extérieur vers l'intérieur, et inversement, tout en empêchant l'entrée de liquide dans la cavité CB du boîtier BB. La patte de fixation PF étant agencée de manière à protéger la membrane respirante MR de ruissellements de liquide.

On comprendra que l'on profite ici de la présence d'une patte de fixation PF pour empêcher le ruissellement de liquide vers une membrane respirante MR qui est installée au niveau, et à côté, d'elle (ou sous elle). Par conséquent, la patte de fixation PF a une double fonction : elle participe à la fixation de son bloc optique BO et elle définit un déflecteur (ou une casquette) anti-ruissellement pour la membrane respirante MR installée à côté d'elle (PF) (ou sous elle (PF)), et par exemple juste en-dessous d'elle (PF).

Cette simplification du boîtier BB par déplacement d'un trou traversant TT recouvert par une membrane respirante MR au niveau, et à côté, d'une patte de fixation PF est particulièrement avantageuse, car elle permet de ne pas avoir à définir de nervure anti-ruissellement autour de ce trou traversant TT, et ainsi de simplifier le moule permettant de réaliser le boîtier BO et donc d'éviter d'avoir à ajouter au moins un mouvement supplémentaire pour dégager chaque nervure anti-ruissellement lors du démoulage. Il en résulte une réduction des complexités du moule et des opérations de fabrication des boîtiers BB et par conséquent une réduction des coûts de fabrication des boîtiers BB.

Par exemple, et comme illustré non limitativement sur la figure 1, au moins deux trous traversants TT recouverts respectivement par deux membranes respirantes MR peuvent être définis dans une zone ZR de la paroi périphérique PP qui est située au niveau, et à côté, d'une patte de fixation PF. Mais le nombre de trous traversants TT définis dans une telle zone ZR de la paroi périphérique PP peut prendre n'importe quelle valeur supérieure ou égale à un.

On notera, bien que cela n'apparaisse pas sur les figures, que le boîtier BB peut comprendre au moins deux pattes de fixation PF qui saillent sur sa paroi périphérique PP et au niveau, et à côté, de chacune desquelles est défini au moins un trou traversant TT recouvert par une membrane respirante MR.

Egalement par exemple, et comme illustré non limitativement sur les figures 1 et 2, la paroi périphérique PP peut comprendre au niveau, et à côté, de chaque patte de fixation PF un renfoncement RT défini dans une zone ZR et dans lequel est défini au moins un trou traversant TT recouvert par une membrane respirante MR. La définition d'au moins un trou traversant TT dans un renfoncement RT de la paroi périphérique PP permet d'éviter encore plus que du liquide de ruissellement atteigne la membrane respirante MR qui recouvre ce trou traversant TT.

Mais dans une variante de réalisation non illustrée, la zone ZR (dans laquelle est défini au moins un trou traversant TT) pourrait ne pas comporter de renfoncement RT.

Egalement par exemple, et comme illustré non limitativement sur les figures 1 et 2, chaque patte de fixation PF peut saillir sensiblement perpendiculairement à une zone (ou portion) ZR de la paroi périphérique PP dans laquelle est défini au moins un trou traversant TT. Mais un angle d'environ 90° n'est pas obligatoire. En effet, l'angle entre une patte de fixation PF et la zone (ou portion) ZR de la paroi périphérique PP (dans laquelle est défini au moins un trou traversant TT) peut être inférieur à 90°. Par exemple, cet angle peut être compris entre 60° et 90°. Mais d'autres valeurs peuvent être utilisés dès lors qu'elles permettent à une patte de fixation PF de définir un déflecteur (ou une casquette) anti-ruissellement pour la membrane respirante MR installée à côté d'elle (ou sous elle).

## Revendications

1. Bloc optique (BO) propre à équiper un véhicule et comprenant un boîtier (BB) i) définissant avec une glace (GP) une cavité (CB) logeant des composants propres à assurer au moins une fonction photométrique, et ii) comportant au moins une patte de fixation (PF) saillant sur une paroi périphérique (PP), **caractérisé en ce que** ladite paroi périphérique (PP) comprend au niveau, et à côté, de ladite patte de fixation (PF) au moins un trou traversant (TT) recouvert par une membrane respirante (MR) propre à permettre une circulation d'air tout en empêchant une entrée de liquide dans ledit boîtier (BB), et **en ce que** ladite patte de fixation (PF) protège ladite membrane respirante (MR) de ruissellements.

2. Bloc optique selon la revendication 1, **caractérisé en ce que** ledit boîtier (BB) comporte au moins deux pattes de fixation (PF) saillant sur ladite paroi périphérique (PP) et au niveau, et à côté, de chacune desquelles est défini au moins un trou traversant (TT) recouvert par une membrane respirante (MR).

3. Bloc optique selon la revendication 1 ou 2, **caractérisé en ce que** ladite paroi périphérique (PP) comprend au niveau, et à côté, de chaque patte de fixation (PF) un renfoncement (RT) dans lequel est défini au moins un trou traversant (TT) recouvert par une membrane respirante (MR).

4. Bloc optique selon l'une des revendication 1 à 3, **caractérisé en ce que** chaque patte de fixation (PF) saille sensiblement perpendiculairement à une portion de ladite paroi périphérique (PP).

5. Véhicule, **caractérisé en ce qu'**il comprend au moins un bloc optique (BO) selon l'une des revendications précédentes.

6. Véhicule selon la revendication 5, **caractérisé en ce qu'**il comprend une extrémité avant comportant chaque bloc optique (BO).

7. Véhicule selon la revendication 5 ou 6, **caractérisé en ce qu'**il est de type automobile.
